Europäisches Patentamt

European Patent Office

Office européen des brevets

(11) Publication number: **0 369 380**
**A2**

## EUROPEAN PATENT APPLICATION

(21) Application number: **89121016.3**

(51) Int. Cl.⁵: **B23B 31/12, B25B 33/00**

(22) Date of filing: **13.11.89**

(30) Priority: **14.11.88 US 271052**
**24.08.89 US 398386**

(43) Date of publication of application:
**23.05.90 Bulletin 90/21**

(84) Designated Contracting States:
**DE FR GB IT**

(71) Applicant: **FLYNN, Jerome R.**
**Suite 117 3857 Birch Street**
**Newport Beach, CA 92660(US)**

(72) Inventor: **FLYNN, Jerome R.**
**Suite 117 3857 Birch Street**
**Newport Beach, CA 92660(US)**

(74) Representative: **Lehmann, Klaus, Dipl.-Ing. et al**
**Schroeter, Fleuchaus, Lehmann, Wehser, Holzer & Gallo Patentanwälte Postfach 71 0350**
**D-8000 München 71(DE)**

(54) Chuck actuator system and method.

(57) A keyless chuck operating system comprises a first member configured for mounting to a chuck drum of a pneumatic or electric drill or the like and a second member configured for mounting to the first member. The first member preferably includes a cavity that encloses the chuck drum to retain the first member in its desired position on the chuck drum. Compressing the second member against the first member causes a force to be exerted on the chuck drum so that turning on the drill causes the chuck drum to rotate relative to the first member to tighten or loosen the chuck depending upon the direction of rotation. The members may include grooves or projections that facilitate their engagement to rotate the chuck drum.

FIG. 1

## CHUCK ACTUATOR SYSTEM AND METHOD

### Background of the Invention

This invention relates to apparatus and methods for operating chucks of rotary power tools and particularly to keyless operation of drill chucks and the like. More particularly, this invention relates to a device that permits keyless operation of a standard chuck without requiring any special chuck construction and without requiring any modifications to be made to an existing chuck in order to use the invention therewith.

Rotary tools are commonly used to perform various operations such as drilling, screwing, sanding and the like. Rotary tools are used not only by professional amateur craftsmen but also by orthopedic surgeons in operations such as installing artificial hip joints and bone screws. In orthopedic surgical procedures, it is often necessary to drill into a bone and tap threads into it so that the bone will retain a threaded screw or the like therein.

A typical rotary tool includes an electric, air or fluid driven motor unit mounted within a housing having a handle with a built in trigger switch for controlling the motor speed. A drive shaft projects forward from the motor and housing to carry a chuck assembly. The chuck assembly typically includes a chuck locking drum cylinder and a chuck inner cylinder. The inner cylinder is threadedly received on the drive shaft, and the locking drum cylinder is mounted concentric to the inner cylinder. The chuck jaws are threadedly engaged in the locking drum and are opened or closed in response to the locking drum being driven clockwise or counterclockwise relative to the shaft. Shafts of rotary tool implements such as drills, screwdrivers and the like include shank portions that are designed to be gripped by the chuck jaws. A typical chuck jaw structure is adjusted to receive differently sized tool shafts by turning the locking drum via a bevel gear positioned on a forward edge of the locking drum. The chuck jaws are manually opened or closed with the aid of a chuck key.

The use of a chuck key to open or close the chuck jaws has several disadvantages. The chuck key is easily misplaced or lost, which can cause problems particularly in surgical uses of rotary tools. Considerable time may be wasted in changing tools in the chuck jaws.

The inventor's patents listed above relate to a one piece device to be mounted on a drill chuck drum. To operate the chuck, a user firmly grasps the device in one hand and turns on the drill. Friction between the device and the chuck drum causes torque sufficient to rotate the chuck drum to open or close the chuck jaws, depending upon the direction of rotation.

United States Patent 4,460,296 to Sivertson, Jr. discloses various devices for providing keyless chuck operation. One device disclosed by Sivertson, Jr. is a drill having a keyless chuck system that includes a first cylindrical ring mounted concentrically with the chuck drum. The first ring has a knurled gripping surface peripherally disposed around its outer end. The first ring includes an inner surface having a diameter slightly larger than the outside diameter of the chuck drum. Three longitudinally aligned fixed guide rails are formed on the outer locking drum of the chuck during its manufacture. The inner surface of the first ring includes a set of three slots that are aligned with the rails. The slots and rails are engaged so that rotational torques exerted on the first ring about the longitudinal axis are transmitted to the chuck drum. A second ring formed of rubber or the like is mounted between the first ring and the drill body. The first and second rings are attached by an adhesive or the like.

A spring biases the rings away from the drill body. To operate the chuck, the user exerts a hand pressure on the first ring to move it and the second ring rearward until the second ring contacts the drill body. The first ring is constructed from a hard material such as steel, plastic or composite materials capable of transmitting rotational forces to the second ring while the second ring frictionally engages the drill body. Actuating the motor then causes the chuck drum to rotate and open or close the chuck jaws, depending upon the direction of rotation. The hand pressure forces the second ring against the drill body.. Friction between the first and second rings causes the chuck jaws to open or close depending on the direction of rotation.

Sivertson, Jr. therefore has the disadvantage of requiring a specially constructed chuck drum that includes rails for engaging the drum with the hand held ring. The apparatus The torque developed between the drill body and the chuck drum is transmitted directly to the user's hand. If the drill motor is activated to produce a sudden, high torque, the user could become injured by the sudden jerk he will receive. If the user should allow the first ring to slip in his grasp, rotation of the first ring could injure the user's fingers by suddenly bending them. Friction between the user's fingers and the moving ring could also cause burns.

### Summary of the Invention

The present invention is designed for optimum operation with a reversible rotary power tool, such as an electrically or pneumatically powered drill. A keyless chuck operating system according to the present invention comprises a first hollow, generally cylindrical member formed of a thermoplastic material, rubber or other similar substance. The first member is configured for mounting on the drum of a chuck. The curved outer surface of the first member may have longitudinal or circumferential grooves thereon. The keyless chuck operation system further comprises a second hollow, generally cylindrical member that may be formed of the same material as the first member. The second member is configured to fit over the first member. The inner surface of the second member may also have longitudinal or circumferential grooves thereon configured for being engaged with the outer surface of the first member. The outer surface of the first member and the inner surface of the second member may have projections extending from selected portions thereof.

The two members may be engaged by gripping the outer member so that chuck drum is held firmly by the inner member so that all a person needs to do to tighten the jaws is to firmly grasp the outer periphery of the outer member and then turn on the drill. Loosening the chuck jaws is done in a manner similar to tightening them except that the drill is adjusted to reverse the direction of rotation so that it turns in a direction that would facilitate removal of a conventional drill bit from a hole or loosen a conventional right hand threaded screw.

A significant advantage of the present invention over previous devices is that only a certain predetermined maximum amount of torque can be transmitted between the user's hand and the drill. This feature is particularly important in preventing the outer member from slipping in the user's hand or from twisting the user's hand and wrist by an amount that could cause injury. The two members act as a clutch so that when the maximum torque is reached, the two members slip relative to one another.

BRIEF DESCRIPTION OF THE DRAWINGS

Figure 1 is a cross sectional view showing a chuck operation device according to the invention having an inner member mounted on a rotary tool chuck and having an outer member mounted on the inner member;

Figure 2 is an end elevation view of a first member of the chuck operation device of Figure 1 showing longitudinal grooves formed on its outer surface;

Figure 3 is a side elevation view of the apparatus of Figure 2;

Figure 4 is an end elevation view of a second member of the chuck operation device of Figure 1;

Figure 5 is a side elevation view of the device of Figure 4;

Figure 6 is a side elevation view showing circumferential grooves that may be formed on the outer surface of the inner member of Figure 1;

Figure 7 is a cross sectional view of the apparatus of Figures 5 and 6 showing longitudinal grooves formed on its inner surface;

Figure 8 illustrates partial engagement of the grooves or formed on the outer surface of the first member and on the inner surface of the second member;

Figure 9 illustrates engagement of the grooves of Figure 8 to tighten or loosen the chuck of Figure 1;

Figure 10 is an exploded perspective view illustrating projections on the inner surface of first member and on the outer surface of the second member that may engaged for locking and unlocking the chuck;

Figure 11 is a side elevation view of the first member showing the projections of Figure 10;

Figure 12 is a cross sectional view of a second embodiment of a chuck operation device according to the invention;

Figure 13 shows the device of Figure 12 in operation to turn the drum of a chuck;

Figure 14 is a cross sectional view of a second embodiment of the invention showing an inner ring configured for mounting to a chuck and a gripping ring for exerting torque on the inner ring;

Figure 15 is a cross sectional view of a gripping ring included in the apparatus of Figure 14;

Figure 16 is a perspective view of the inner ring in included in the embodiment of the invention shown in Figure 14;

Figure 17 is a perspective view of the gripping ring shown in Figures 14 and 15;

Figure 18 is an end view of the apparatus of Figure 14; and

Figure 19 is and end view of the inner ring shown in Figures 14 and 17.

DESCRIPTION OF THE PREFERRED EMBODIMENT

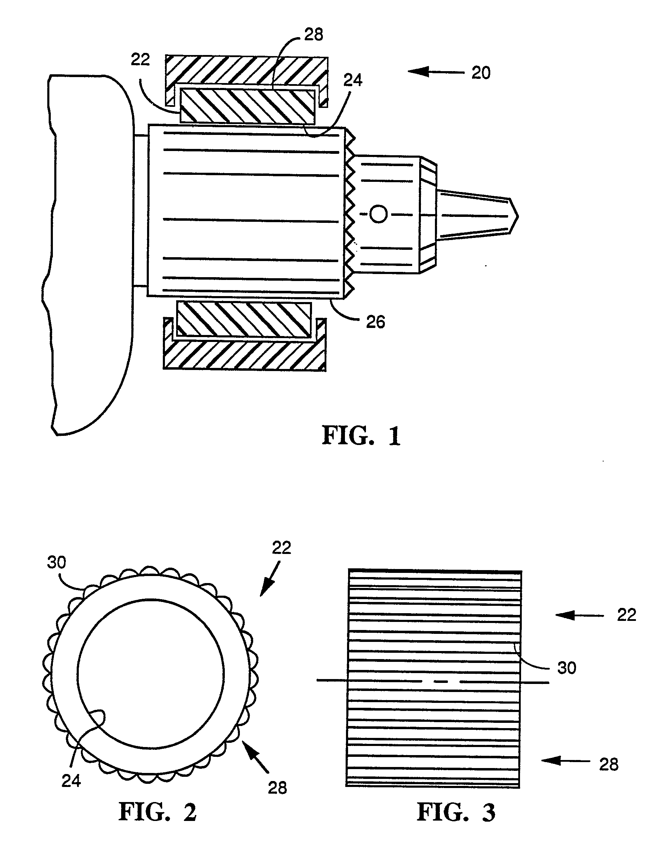

Referring to Figures 1-5, a keyless chuck operating device 20 that may be included in the present invention includes a first member 22 formed as a hollow, generally cylindrical body. Referring to Figures 1-3, the first member 22 includes a central passage 24 therein for receiving a chuck locking drum 26 of a type well known in the art used for electric and pneumatic drills and the like. The walls of the central passage 24 may be textured to provide additional friction between the chuck drum 26 and the chuck operating device 20. The chuck operating device 20 may be formed by an injection molding process. The textured surface in the walls of the central passage 24 may be formed by sandblasting the mold (not shown).

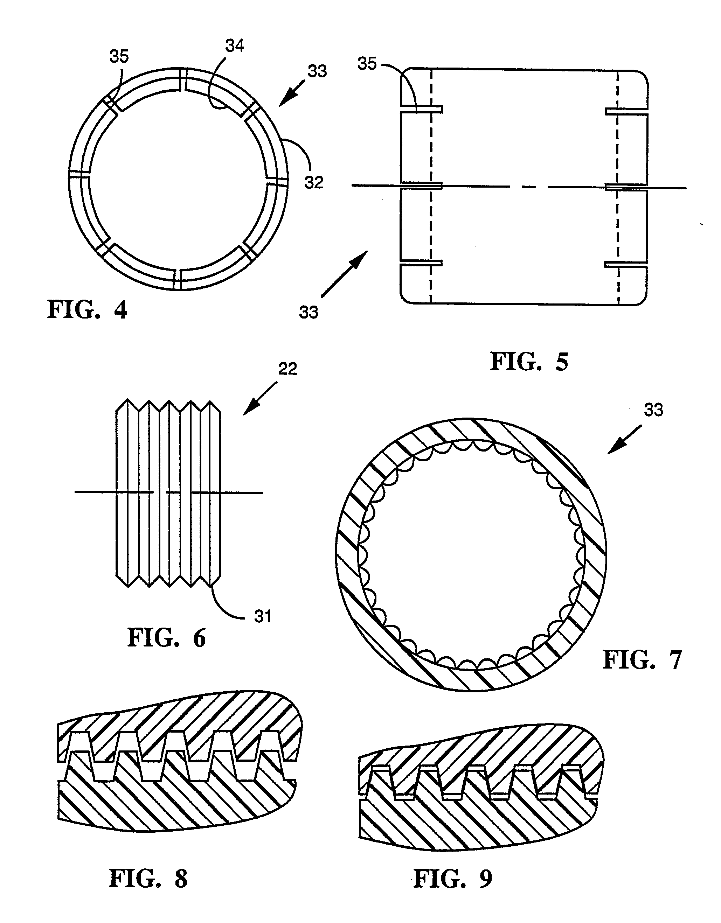

Referring to Figures 2 and 3, the first member 22 may have an outer surface 28 in which a first plurality of grooves are formed such that the spaces between the grooves form threads 30. The threads 30 of Figures 2 and 3 are shown to be aligned with the longitudinal axis of the member 22. However as shown in Figure 6, threads 31 may extend around the circumference of the member 22.

Referring again to Figure 1, the chuck operation device 20 is used to operate the jaws of the chuck by first placing the body 22 on the chuck so that the inner walls 24 firmly grip the outer surface of the chuck locking drum 26. It is recognized that chuck locking drums of various diameters may exist. The diameter of the passage 24 should be selected such that the body 22 will fit upon the chuck drum 26. Since the body 22 is formed of an elastomer, the diameter of the passage 24 may be slightly less than the diameter of the chuck. The elastomer permits the body 22 to stretch to fit over the chuck drum. Since the invention is designed to remain upon the chuck when the rotary tool is being operated, the inner diameter of the passage 24 must not be large enough to permit the body 22 to fall off the chuck.

Referring to Figures 1, 4 and 5, the chuck operation device 20 includes a second member 33 that is also formed as a generally hollow cylinder that fits around the first member 22. The two members 22 and 33 are formed as separate pieces, and then the member 22 is inserted into the member 33.

The member 33 has a generally cylindrical outer side surface 32. As shown in Figures 4 and 5, a plurality of flaps 34 are formed in the ends of the member 33. The flaps 34 extend from the edges of the cylindrical surface 32 toward the centers of the circular ends of the member 33. The length of the flaps 34 preferably ranges up to half the radius of the circular ends. The flaps preferably are separated by slots 35 in the material that forms the member 33. The slots may extend from the end edges 40 of the flaps into the cylindrical surface 32. The flaps are sufficiently flexible to permit the first member to be inserted inside the second member. The flaps retain the first member inside the second member while the chuck operation device 20 is mounted to the chuck drum and while the chuck drum rotates as the drill is in use.

To operate the chuck jaws, the user may grasp the member 23 in one hand and activate the power switch (not shown) of the drill with his other hand. The members 22 and 33 may be frictionally engaged by manually compressing the member 33 radially so that it contacts the inner member 22 at two radially opposed locations. Alternatively, the members 22 and 33 may be frictionally engaged by turning the member 33 so that its longitudinal axis is out of alignment with the longitudinal axis of the member 22 by an amount sufficient to cause contact between the inner surface of the member 33 and the outer surface of the member 22. The members 22 and 33 then contact at two points that are at opposite ends of the members.

As shown in Figure 7, the outer member 33 may have threads 37 formed on the inner side of the cylinder 32. The threads 37 preferably are formed to be substantially the same dimensions as the threads 30 on the outer portion of the inner member 22. Both the threads 30 and the threads 37 preferably have zero pitch so that rotation of one member relative to the other does not cause them to have relative longitudinal motion.

Figures 8 and 9 show threaded portions 52 and 54 on the outer wall of the inner member 22 and on the inner wall of the outer member 33. When the threads are disengaged as shown in Figure 8, the chuck drum is free to rotate with changing the position of the chuck jaws. When the outer member 33 is compressed onto the inner member 22, the threads 52 and 54 become engaged so that torque adequate to operate the chuck jaws may be exerted on the chuck drum 26.

The members 22 and 33 of the chuck operating device 20 are preferably formed of an elastomeric material having a shore hardness in the range of 40 to 70. This hardness permits the chuck operation device 20 to be mounted on a chuck and provides the firmness required to operate the chuck drum 26. The chuck operation device 20 is preferably formed by molding using generally well known molding techniques. The member 33 may also be formed to include a metal ring that extends around the inner member 22.

A significant advantage of the present invention over previous devices is that only a certain predetermined maximum amount of torque can be transmitted between the user's hand and the chuck drum. This feature is particularly important in preventing the outer member 33 from slipping in the user's hand or from twisting the user's hand and wrist by an amount that could cause injury.

Squeezing the outer member 33 slightly so that it frictionally engages the inner member 20 causes the chuck jaws to tend to open or close, depending upon the direction of rotation. When the maximum torque is reached, slippage occurs at the contacting surfaces of the two members 20 and 33, which act as a clutch. Therefore, after the chuck jaws are fully open or closed, an excessive amount of rotational energy cannot be transmitted to the outer member 33 and, hence, to the user's hand.

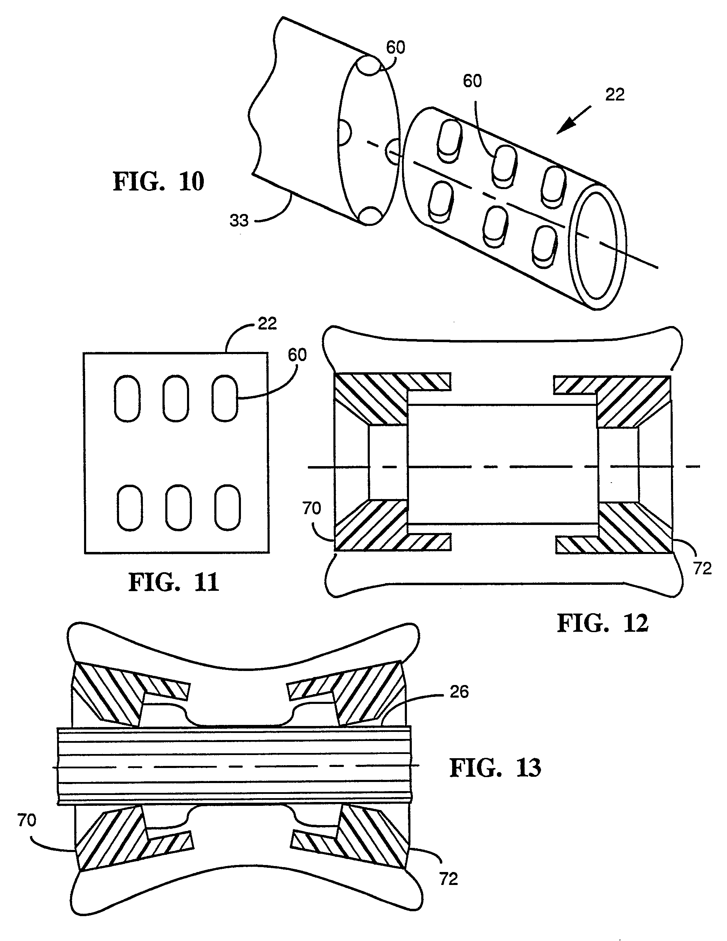

Figures 10 and 11 show the outlines of projections 60 that may be formed on the outer surface of the first member 22 and projections 62 that may be formed on the inner surface of the outer member 33. When the outer member 33 is rotated and held with the projections engaged as shown in Figure 10, the two members are locked together so that turning on the drill causes the chuck actuation device 20 to exert torque on the chuck drum 26. When the projections are disengaged as shown in Figure 11, then no torque is transferred from the chuck actuation device to the chuck drum 26.

There is a maximum amount of torque that the chuck actuation device with the projections shown in Figures 10 and 11 can exert on the chuck drum 26. The maximum torque depends on the hardness of the materials, the relative coefficient of friction between the materials, the size of the projections and the space between them. When the maximum torque is exceeded, the projections slip past each other so that the members 22 and 30 then rotate relative to one another.

After the chuck operation device 20 is mounted on the chuck, the chuck jaws may be operated if the user grasps the outer periphery of the second member 33 with one hand and turns on the motor of the rotary tool with the other hand. The second member is engaged with the first member to exert torque on the chuck drum 26.

The manner of engaging the inner and outer members depends upon how their mating surfaces are formed and upon what materials are used to form the inner and outer members. If the outer member 33 is formed of an elastomer then it can be compressed upon the inner member 22. The mating surfaces of the inner and outer members may be smooth, textured, grooved or they may have projections formed thereon. The outer member may also be moved into engagement with the inner member by twisting the outer member so that the two members are no longer longitudinally aligned. The end edges of the two members will then become frictionally engaged. Torque developed by the force on the chuck drum 26 from pressing the inner walls of the member 22 against the chuck will tighten or loosen the jaws depending upon the direction the chuck rotates after the drill is turned on.

Figure 12 shows a second chuck operation device 68 according to the invention. A pair of inner end members 70 and 72 are formed to have a cylindrical openings 74 and 76, respectively, that are about the same diameter as the chuck drum 26. The end members 70 and 72 preferably are formed of a ridged plastic material such as nylon. The end members preferably have beveled portions on the outer surfaces thereof to facilitate mounting the device 68 upon the chuck drum. An outer member 76 is formed around the inner end members 70 and 72.

The outer member is preferably formed of a thermoplastic rubber material that can be compressed to exert a torque on the chuck drum 26. When the outer member 76 is radially compressed as shown in Figure 13, the thermoplastic material extends between the end members 70 and 72 to contrast the chuck drum 26. The end members tend to rotate so that their outer ends do not contact the chuck drum when sufficient radial force is applied to the outer member. The portions of the nylon inner end members 70 and 72 that contact the chuck drum act as skid pads. The hardness of the inner end members 70 and 72 and the outer member 76 and the coefficient of friction between the nylon end members and the chuck drum cooperate to act as a slip clutch that limits the amount of torque that can be applied to the chuck drum.

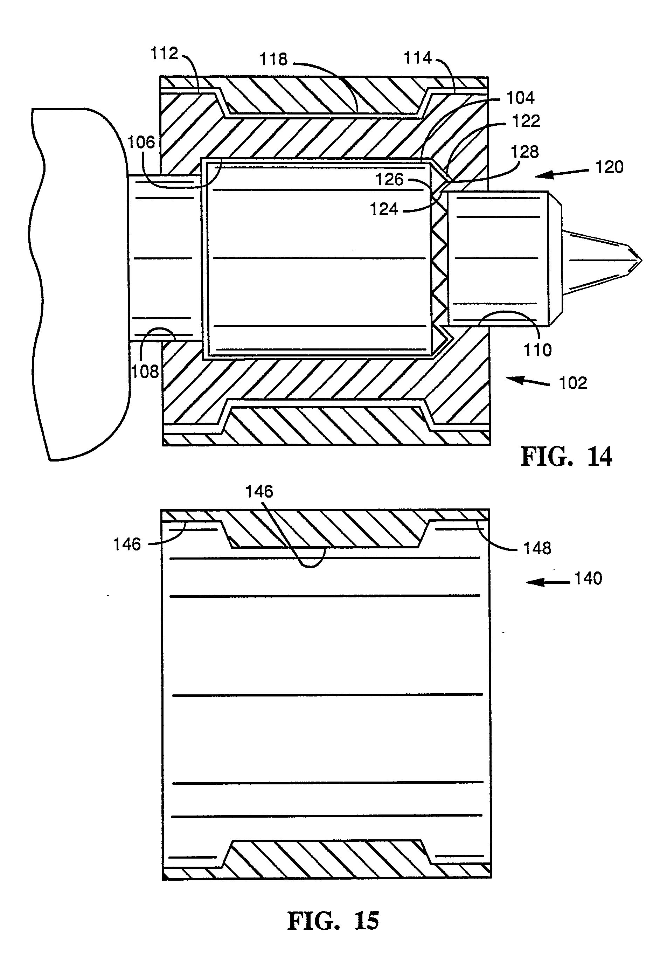

Referring to Figure 14, a chuck operation device 100 includes an inner ring 102 formed to fit securely upon a chuck drum 104. The inner ring 102 includes a cavity 106 that completely encloses the chuck drum 104. The ends of the inner ring 102 have openings 108 and 110 so that the chuck drum 104 can be inserted into the inner ring 102. The inner ring 102 is formed of a material such as thermoplastic rubber that is sufficiently deformable to permit the chuck drum 104 to be inserted into the opening 108. The chuck then extends out of the inner ring at the opening 110. To provide clarity in illustrating the structure of the chuck operation device 100, the walls of the cavity 106 are shown spaced apart from the chuck drum 104. However, in actual use, the walls of the cavity 106 fit securely upon the drum 104.

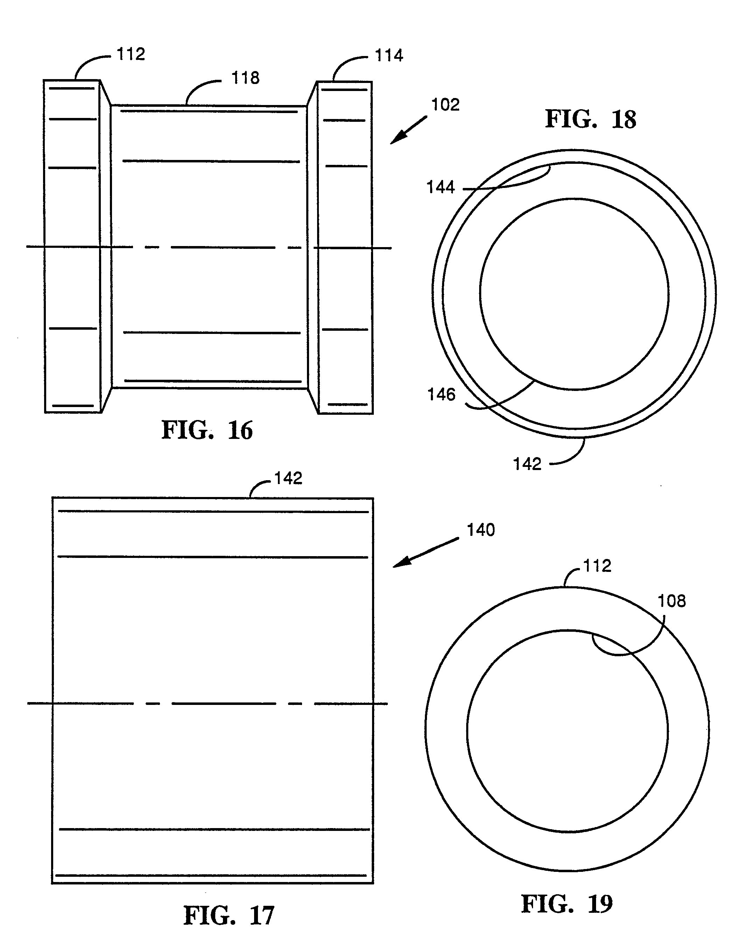

Referring to Figures 14, 16 and 19, the inner ring 102 is formed generally as a hollow cylinder. The outer ends of the cylindrical inner ring preferably include flanges 112 and 114 where the outside diameter of the cylinder is greater than at the region between the flanges 112 and 114 where a circumferential groove 118 extends around the central portion of the inner ring 102. As shown in Figure 14, an inner wall portion 120 of the inner ring 102 may include grooves 122 and projections 124 that mate with projections 126 and grooves 128, respectively, that are found on typical chuck drums for engaging a conventional chuck key.

Referring to Figures 14-17, the chuck operation device 100 also includes a gripping ring 140 that fits around the inner ring 102. The gripping ring 140 has an outer surface 142 formed generally as a cylinder. The gripping ring 140 has inner surfaces 144, 146 and 148 that generally give the gripping ring 140 a hollow cylindrical shape. The surfaces 144 and 148 fit over the flanges 112 and 114, respectively. The surface 146 extends inward to form a ring inside the gripping ring 140. The surface 146 is formed to engage the recess 118 in the inner ring when a person using the chuck operation device 100 manually compresses the gripping ring 140 about the inner ring 102. Since the surfaces 144 and 148 extend over the flanges 112 and 114, respectively, the user's hand is prevented from coming into contact with any part of the inner ring 102. To use earlier keyless chuck operation devices, the user's hand directly contacts components that are secured to the rotating chuck drum so that force is transmitted directly to the user's hand. Preventing the user's hand from contacting the parts of the device that rotate at the same speed as the chuck drum provides a degree of safety not found in the prior devices.

The outer surface of the inner ring 102 may have longitudinal ridges and grooves thereon as shown in Figure 2 for the inner ring 22. The gripping ring 140 may have ridges and grooves on both the inner and outer surfaces thereof. The gripping ring 140 is preferably formed of a material such as polyethylene, which is more rigid than the thermoplastic rubber used in forming the inner ring 102. The ridges and grooves in the gripping ring 140 aid in deforming it to compress it about the inner ring. The inner and outer grooves are preferably arranged so that the points of maximum depth are angularly aligned to provide further ease in deforming the gripping ring 140.

The embodiment of the invention shown in Figures 14-17 and described herein also has the clutch feature described above with reference to Figures 1-9.

The inner ring 100 is preferably formed of an elastomer. The gripping ring may be formed of an elastomer or a substantially rigid material such as a hard plastic or metal.

The present invention may be used with a variety of chuck drum diameters. If the inner ring 100 has an inner diameter so large that there is a space between the inner ring and the chuck drum, then a small ring of epoxy resin and a small ring of epoxy catalyst may be placed on the chuck drum. The catalyst and resin should then be mixed and the inner ring 102 slipped over the chuck drum. Any excess epoxy that comes off the chuck drum is wiped off before the epoxy cures. The epoxy expands slightly as it cures to fill the void between the inner ring and the chuck drum. Therefore, the inner ring 102 and the chuck drum cooperate to act as a mold for the curing epoxy. The cured epoxy fills the void and prevents the inner ring 102 from slipping on the chuck drum.

The structures and methods disclosed herein illustrate the principles of the present invention. The invention may be embodied in other specific forms without departing from its spirit or essential characteristics. Therefore, the described embodiments are to to be considered in all respects as exemplary and illustrative rather than restrictive. Therefore, the appended claims rather than the foregoing description define the scope of the invention. All modifications to the embodiments described herein that come within the meaning and range of equivalence of the claims are embraced within the scope of the invention.

## Claims

1. A system for operating a chuck of a rotary tool, the chuck including a plurality of jaws that may be tightened around a tool shank or disengaged from the shank by rotation of a chuck drum relative to the tool shank, characterised by:
a first generally hollow cylindrical member formed for mounting on the chuck drum so that an inner surface of the first member is frictionally engaged with the chuck drum; and
a second generally hollow cylindrical member rotatably mounted on the first member and concentric therewith such that an inner surface of the second member and an outer surface of the first member are juxtaposed, the inner surface of the second member being frictionally engagable with the outer surface of the first member to cause the first member to exert a radially directed force on the chuck drum such that application of power to the rotary tool while first and second members are frictionally engaged causes a torque on the chuck drum for tightening or loosening the chuck jaws, depending upon the direction of rotation of the chuck drum.

2. The system of claim 1 wherein the first member is formed of a polymer such as rubber or the like and the second member is formed of a metal.

3. The system of claim 1 further including a pair of flanges formed at the ends of the first member and a circumferential recess formed in the outer sidewall of the first member between the flanges and the second member is formed generally as a hollow cylinder formed to fit around the first member, the second member including a stepped cylindrical bore therein, the cylindrical bore having first and second steps for engaging the flanges in the first member and a third step having a diameter smaller than the first and second steps to form an inward projecting portion formed to fit in the circumferential recess in the first member.

4. The system of claim 3 wherein the second member includes a first plurality of longitudinal ridges and grooves on its outer surface to aid a user in manually grasping the second member and a second plurality of ridges and grooves on its inner surface for engaging the outer surface of the first member, the first and second plurality of ridges and grooves being arranged to increase the flexibility of the outer member.

5. A method for operating a chuck of a rotary tool, the chuck including a plurality of jaws that may be tightened around a tool shank or disengaged from the shank by rotation of a chuck drum relative to the tool shank, characterised by the steps of:

mounting a first generally hollow cylindrical member on the chuck drum so that an inner surface of the first member is frictionally engaged with the chuck drum; and

mounting a second generally hollow cylindrical member rotatably on the first member and concentric therewith such that an inner surface of the second member and an outer surface of the first member are juxtaposed, the inner surface of the second member being frictionally engagable with the outer surface of the first member to cause the first member to exert a radially directed force on the chuck drum; and

applying power to the rotary tool while first and second members are frictionally engaged causes a torque on the chuck drum for tightening or loosening the chuck jaws, depending upon the direction of rotation of the chuck drum.

6. The method of claim 5 comprising the steps of:

forming the first member is formed of a polymer such as rubber or the like; and

forming the second member of a metallic material.

7. The method of claim 6 comprising the steps of:

forming the first member of a polymer such as rubber or the like; and

forming the second member of an elastomeric material having a shore A hardness in the range of 40 to 70.

8. The method of claim 6 further including the steps of:

forming a pair of flanges at the ends of the first member;

forming a circumferential recess in the outer sidewall of the first member between the flanges;

forming the second member generally as a hollow cylinder to fit around the first member;

forming a stepped cylindrical bore in the second member including therein; and

forming first and second steps in the cylindrical bore for engaging the flanges in the first member and a third step having a diameter smaller than the first and second steps to form an inward projecting portion formed to fit in the circumferential recess in the first member.

9. The method of claim 8 including the steps of:

forming the second member to include a first plurality of longitudinal ridges and grooves on its outer surface to aid a user in manually grasping the second member and a second plurality of ridges and grooves on its inner surface for engaging the outer surface of the first member; and

arranging the first and second plurality of ridges and grooves to increase the flexibility of the outer member.

FIG. 1

FIG. 2

FIG. 3

**FIG. 4**

**FIG. 5**

**FIG. 6**

**FIG. 7**

**FIG. 8**

**FIG. 9**

FIG. 10

FIG. 11

FIG. 12

FIG. 13

FIG. 14

FIG. 15

112 114 118 102

FIG. 18

FIG. 16

144

146

142

142

140

112 108

FIG. 17

FIG. 19